# EUROPEAN PATENT APPLICATION

(11) **EP 1 716 911 A1**
(43) Date of publication of application: **02.11.2006**
(21) Application number: 05709455.9
(22) Date of filing: 28.01.2005
(51) Int. Cl.: B01D 53/62, C01B 31/20

(54) **SYSTEM AND METHOD FOR RECOVERING CARBON DIOXIDE IN EXHAUST GAS**

(30) Priority: 30.01.2004 JP 2004023547; 26.07.2004 JP 2004216800
(71) Applicant: KABUSHIKI KAISHA TOSHIBA, Tokyo 105-8001 (JP)
(72) Inventor: MORIYAMA, Hideshige I.P.Division, Toshiba Corp., Tokyo 1058001 (JP); MATSUNAGA, Kentaro I.P.Division, Toshiba Corp., Tokyo 1058001 (JP); YAMASHITA, Katsuya I.P.Division, Toshiba Corp., Tokyo 1058001 (JP)
(74) Representative: HOFFMANN EITLE
(86) International application number: PCT/JP2005/001229
(87) International publication number: WO 2005/072851

(57) **Abstract**

An alkaline solution reflux path which refluxes an alkaline solution being discharged from an alkaline solution discharge port 101 of an absorber 100 to an alkaline solution introduction port 102 to absorb carbon dioxide and the like, and an alkaline solution reflux path which refluxes a regenerated alkaline solution being discharged from a regenerated alkaline solution discharge port 111 of a regenerator 110 to an alkaline solution jet port 112 and discharges the carbon dioxide to regenerate an alkaline solution are disposed separately and independently. Thus, the flow rates and the like of the alkaline solutions flowing through the individual alkaline solution reflux paths can be set individually.

## Description

### TECHNICAL FIELD

The present invention relates to a system for recovering carbon dioxide being discharged from a thermal power plant, a municipal waste incineration plant, a natural gas extraction site or the like, and more particularly to a system and method for recovering carbon dioxide in an exhaust gas, which can recover carbon dioxide by an alkaline solution.

### BACKGROUND ART

In these years, there is an increasing significant concern in connection with a global warming issue caused by a greenhouse effect of carbon dioxide which is a combustion product from the burning of fossil fuels. According to the Kyoto Protocol to the UnitedNations Framework Convention on Climate Change, Japan is required to reduce the greenhouse gas emission through the years of 2008-2012 to a level 6% below the total emission in 1990.

Under the circumstances as described above, there is disclosed in, for example, JP-A 4-346816 (KOKAI) a system for recovering carbon dioxide by using, for example, a potassium carbonate solution which is an alkali material as an liquid absorbent for carbon dioxide being discharged from thermal power stations, municipal waste incineration plants, natural gas extraction sites and the like. There is also disclosed in, for example, JP-A 2002-126439 (KOKAI) a system for recovering carbon dioxide by using, for example, an amine solution which is an alkali material. (See Patent Document 1, Patent Document 2)

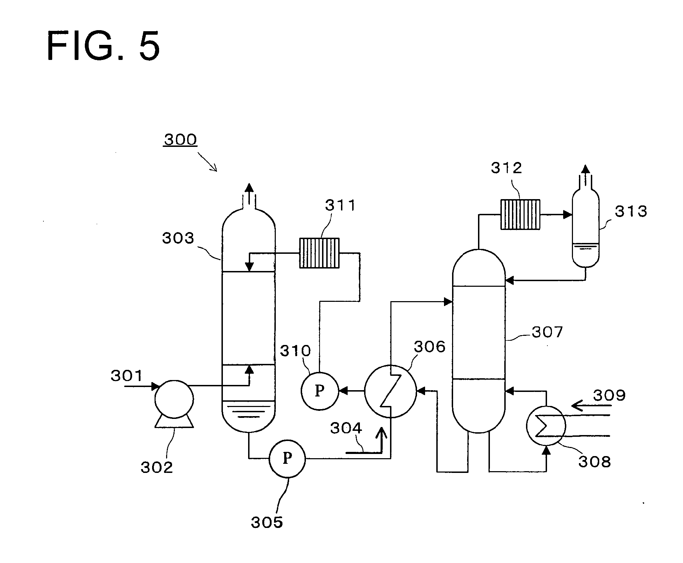

Fig. 5 shows an overview of a conventional carbon dioxide recovery system 300 for recovering carbon dioxide by using a potassium carbonate solution as an alkaline solution.

In the conventional carbon dioxide recovery system 300 shown in Fig. 5, an exhaust gas 301 discharged when a fossil fuel is burnt is guided to an absorber 303 by a gas blower 302. An alkaline solution 304 having a temperature of about 55°C is supplied to the top of the absorber 303, and the supplied alkaline solution 304 absorbs carbon dioxide from the exhaust gas 301 by contacting to the introduced exhaust gas 301. Meanwhile, the exhaust gas 301 from which the carbon dioxide has been absorbed by the alkaline solution 304 is released into the atmosphere from the top of the absorber 303.

The alkaline solution 304 having received the carbon dioxide is guided from a lower part of the absorber 303 to a heat exchanger 306 by an extraction pump 305 and further guided to a regenerator 307.

The alkaline solution 304 guided into the regenerator 307 is heated to a temperature of about 100°C by steam 309 of a heater 308 and then stirred. Then, the carbon dioxide is diffused from the alkaline solution 304 and regenerated into the alkaline solution 304 capable of absorbing the carbon dioxide. The regenerated alkaline solution 304 is returned to an upper part of the absorber 303 by a circulation pump 310 via the heat exchanger 306 and a cooler 311. Meanwhile, the carbon dioxide diffused from the alkaline solution 304 is guided to a separator 313 via a cooler 312, dehydrated by the separator 313 and recovered.

In the conventional carbon dioxide recovery system 300 configured as described above, a circulation line for the alkaline solution 304 is disposed between the absorber 303 and the regenerator 307, the steam 309 of a power generation boiler is used in the regenerator 307 to heat instantaneously the alkaline solution 304 up to a temperature of about 100°C to regenerate, and the regenerated alkaline solution 304 is cooled instantaneously down to a temperature of about 55°C and returned to the absorber 303.

In the above-described conventional carbon dioxide recovery system, large heat quantity from the steam 309 of the power generation boiler is used to heat an enormous flow rate of the alkaline solution 304 instantaneously up to a prescribed temperature by the regenerator 307, so that the above system has a problem that the thermal efficiency cannot be improved.

Besides, the absorber 303 and the regenerator 307 of the conventional carbon dioxide recovery system are connected through a single circulation line, so that the alkaline solution 304 which is circulated through the absorber 303 and the regenerator 307 cannot be basically circulated at a different speed. Therefore, the enormous flow rate of the alkaline solution 304 required in the carbon dioxide absorption step cannot be lowered to a smaller flow rate in a regeneration step.

And, when the recovery system which has the absorber 303 and the regenerator 307 connected through a single circulation line uses an amine solution, it is necessary to set a temperature of the alkaline solution 304 in the absorber 303 to about 50°C and a temperature of the alkaline solution 304 in the regenerator 307 to about 120°C. Therefore, the heat exchanger must be disposed between the absorber 303 and the regenerator 307 to make troublesome adjustment of a temperature of the alkaline solution 304.
Patent Document 1: JP-A 4-346816 (KOKAI)
Patent Document 2: JP-A 2002-126439 (KOKAI)

### SUMMARY OF THE INVENTION

The present invention provides a system and a method for recovering carbon dioxide contained in an exhaust gas that can regenerate an alkaline solution without using a large volume of steam of a power generation boiler and can circulate the alkaline solution to an absorption device and a regeneration device through individually independent reflux lines.

A system for recovering carbon dioxide in an exhaust gas according to the present invention, comprises an absorption device which is provided with an exhaust gas introduction port, an alkaline solution introduction port, a remaining exhaust gas discharge port and an alkaline solution discharge port and causes gas-liquid contact between an exhaust gas introduced from the exhaust gas introduction port and an alkaline solution introduced from the alkaline solution introduction port to absorb carbon dioxide contained in the exhaust gas by the alkaline solution; a regeneration device which is provided with an alkaline solution spurt port, a regenerated alkaline solution discharge port and a carbon dioxide discharge port and discharges carbon dioxide from the alkaline solution having absorbed the carbon dioxide to regenerate the alkaline solution; a first alkaline solution reflux line which refluxes the alkaline solution being discharged from the alkaline solution discharge port of the absorption device to the alkaline solution introduction port; a second alkaline solution reflux line which refluxes the regenerated alkaline solution being discharged from the regenerated alkaline solution discharge port of the regeneration device to the alkaline solution spurt port; and a storage tank which is comprised of a plurality of split tanks capable of intervening in either the first alkaline solution reflux line or the second alkaline solution reflux line by switching the alkaline solution reflux lines.

According to the system for recovering the carbon dioxide in the exhaust gas, the first alkaline solution reflux line, which refluxes the alkaline solution being discharged from the alkaline solution discharge port of the absorption device to the alkaline solution introduction port and absorbs carbon dioxide, and the second alkaline solution reflux line, which refluxes the regenerated alkaline solution being discharged from the regenerated alkaline solution discharge port of the regeneration device to the alkaline solution spurt port and discharges carbon dioxide to regenerate the alkaline solution can be disposed separately and independently. Thus, the flow rates of the alkaline solutions flowing through the individual alkaline solution reflux lines can be set independently, and a reflux flow rate and the like of the alkaline solution suitable for eachof the carbon dioxide absorption operation and the alkaline solution regeneration operation can be set. And, the system for recovering carbon dioxide contained in an exhaust gas does not need to heat instantaneously the alkaline solution by the regeneration device and does not need a large heating device or large heat quantity. Thus, the thermal efficiency of the system can be improved.

A method for recovering carbon dioxide in an exhaust gas according to the present invention, comprises a first absorption step which refluxes a first alkaline solution being discharged from an alkaline solution discharge port of an absorption device to an alkaline solution introduction port of the absorption device through a first split tank among a plurality of split tanks configuring a storage tank to cause gas-liquid contact between the exhaust gas and the first alkaline solution to repeatedly absorb carbon dioxide contained in the exhaust gas by the first alkaline solution; and a first regeneration step which switches a reflux line of the first alkaline solution to introduce the first alkaline solution having absorbed the carbon dioxide in the first absorption step to an alkaline solution spurt port of a regeneration device, refluxes the first alkaline solution being discharged from a regenerated alkaline solution discharge port of the regeneration device to the alkaline solution spurt port through the first split tank, and discharges repeatedly the carbon dioxide into the regeneration device to regenerate the carbon dioxide absorption capacity of the first alkaline solution.

According to the method for recovering carbon dioxide contained in an exhaust gas, the reflux line of the first alkaline solution which absorbs carbon dioxide and the reflux line of the alkaline solution to regenerate the first alkaline solution by discharging the carbon dioxide are separately disposed independently, and the reflux lines can be switched to selectively reflux the first alkaline solution to the individual reflux lines. The flow rates of the first alkaline solutions flowing through the individual reflux lines can be set individually, and a reflux flow rate and the like of the first alkaline solution suitable for a carbon dioxide absorption operation and an alkaline solution regeneration operation can be set. The system for recovering carbon dioxide contained in the exhaust gas does not need to heat instantaneously the alkaline solution by the regeneration device and does not need a large heating device or large heat quantity. Thus, the thermal efficiency of the system can be improved.

The method for recovering carbon dioxide in an exhaust gas, further comprises a second absorption step which guides a second alkaline solution stored in a second split tank of the storage tank to the alkaline solution introduction port of the absorption device when the first regeneration step is being performed, refluxes the second alkaline solution being discharged from the alkaline solution discharge port of the absorption device to the alkaline solution introduction port through the second split tank and causes gas-liquid contact between the exhaust gas and the second alkaline solution to repeatedly absorb the carbon dioxide contained in the exhaust gas by the second alkaline solution.

A system for recovering carbon dioxide in an exhaust gas according to the present invention, comprises an absorption device which is provided with an exhaust gas introduction port, an alkaline solution introduction port, a remaining exhaust gas discharge port and an alkaline solution discharge port, and causes gas-liquid contact between the introduced exhaust gas and an alkaline solution to absorb carbon dioxide contained in the exhaust gas by the alkaline solution to produce a reaction product insoluble compound; an alkaline solution reflux line which refluxes the alkaline solution being discharged from the alkaline solution discharge port of the absorption device to the alkaline solution introduction port; and a collection tank which is intervened in the alkaline solution reflux line or connected by a pipe branched from the alkaline solution reflux line to collect an insoluble compound contained in the alkaline solution.

According to the system for recovering carbon dioxide contained in the exhaust gas, the reaction product insoluble compound produced as a result of the absorption of the carbon dioxide contained in the exhaust gas by the alkaline solution within the absorption device flows together with the alkaline solution through the alkaline solution reflux line to reach the collection tank. The insoluble compound has a specific gravity larger than that of the alkaline solution, so that the insoluble compound deposits on a lower part of the collection tank, and the insoluble compound deposited in the collection tank can be collected. And, the alkaline solution which is especially at an upper part of the collection tank and did not contribute to the generation of the insoluble compound can be refluxed again to the alkaline solution introduction port through the alkaline solution reflux line.

The system for recovering carbon dioxide in an exhaust gas, further comprises a regeneration device to which the insoluble compound is supplied and which heats the insoluble compound to discharge carbon dioxide to regenerate an alkali material, which configures the alkaline solution, from the insoluble compound.

A method for recovering carbon dioxide in an exhaust gas according to the present invention, comprises an absorption step which causes gas-liquid contact between the exhaust gas and an alkaline solution and absorbs the carbon dioxide contained in the exhaust gas by the alkaline solution to generate a reaction product insoluble compound; a circulation step which causes repeatedly gas-liquid contact between the alkaline solution and the exhaust gas; and a collection step which collects the insoluble compound contained in the alkaline solution.

According to the method for recovering the carbon dioxide contained in the exhaust gas, the reaction product insoluble compound which is produced as a result of the absorption of the carbon dioxide contained in the exhaust gas by the alkaline solution in the absorption step has a specific gravity larger than that of the alkaline solution in the collection step, so that the insoluble compound deposits on a lower part of the collection tank. Thus, the deposited insoluble compound can be collected in the collection step. And, the alkaline solution which did not contribute to the generation of the insoluble compound can be subjected to the gas-liquid contact again with the exhaust gas in the circulation step.

The method for recovering carbon dioxide in an exhaust gas, further comprises a regeneration step which heats the insoluble compound collected in the collection step to discharge the carbon dioxide and regenerates an alkali material, which configures the alkaline solution, from the insoluble compound.

### BRIEF DESCRIPTION OF THE DRAWINGS

[FIG. 1] Fig. 1 is a general view showing a carbon dioxide recovery system of a first embodiment of the present invention.
[FIG. 2] Fig. 2 is a general view showing a carbon dioxide recovery system of a fourth embodiment of the present invention.
[FIG. 3] Fig. 3 is a general view showing a carbon dioxide recovery system of a fifth embodiment of the present invention.
[FIG. 4] Fig. 4 is a diagram showing the results of measuring a carbon dioxide recovery rate by an alkaline solution.
[FIG. 5] Fig. 5 is a general view showing a conventional carbon dioxide recovery system.

### BEST MODE FOR IMPLEMENTING THE INVENTION

Embodiments of the present invention will be described with reference to the drawings.

### (FIRST EMBODIMENT)

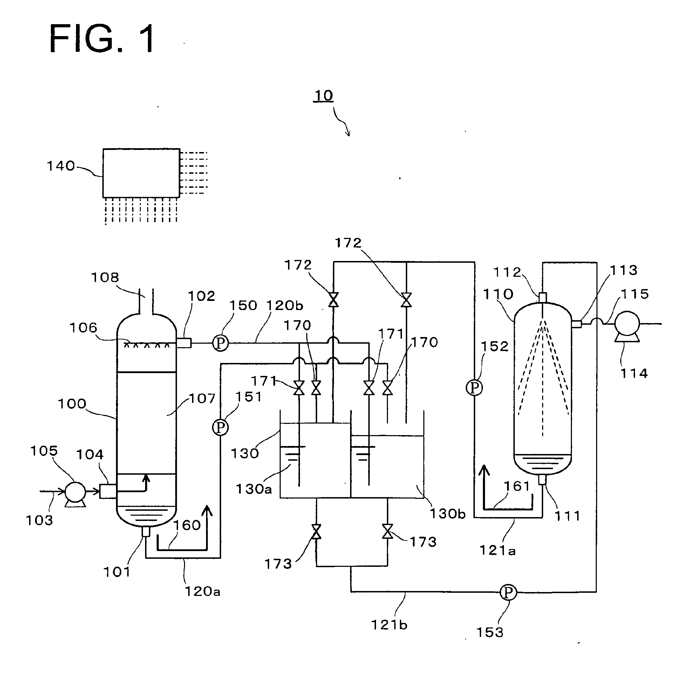

Fig. 1 shows a general view of a carbon dioxide recovery system 10 of the first embodiment of the present invention.

The carbon dioxide recovery system 10 is mainly comprised of an absorber 100 in which gas-liquid contact of the introduced exhaust gas and an alkaline solution is performed, a regenerator 110 which generates an alkaline solution by discharging carbon dioxide from the alkaline solution having absorbed the carbon dioxide, alkaline solution reflux lines 120a, 120b which reflux the alkaline solution being discharged from an alkaline solution discharge port 101 of the absorber 100 to an alkaline solution introduction port 102, alkaline solution reflux lines 121a, 121b which reflux the regenerated alkaline solution being discharged from a regenerated alkaline solution discharge port 111 of the regenerator 110 to an alkaline solution jet port 112, a storage tank 130 which is comprised of plural split tanks 130a, 130b intervened in the alkaline solution reflux lines 120a, 120b or the alkaline solution reflux lines 121a, 121b, and a control section 140 which controls pumps, valves and individual equipment.

In Fig. 1, the control section 140 is electrically connected to individual pumps, valves, measuring equipment and individual construction equipment, but their connection lines are omitted for convenience of clear illustration.

First, an alkaline solution reflux path for refluxing an alkaline solution 160 being discharged from the alkaline solution discharge port 101 of the absorber 100 to the alkaline solution introduction port 102 will be described.

An exhaust gas introduction port 104 for guiding an exhaust gas 103 containing carbon dioxide discharged from a thermal power plant, a municipal waste incineration plant or the like into the absorber 100 is formed at a lower part of the absorber 100. And, a gas blower 105 for blowing the exhaust gas 103 into the absorber 100 is connected to the exhaust gas introduction port 104. The alkaline solution introduction port 102 which introduces the alkaline solution 160 being supplied from the storage tank 130 by a feed pump 150 is formed at an upper part of the absorber 100. The alkaline solution introduction port 102 is provided with an alkaline solution jet part 106 for jetting the alkaline solution 160. Besides, the absorber 100 has therein a packing 107 for causing mainly gas-liquid contact of the alkaline solution 160 which is jetted from the alkaline solution jet part 106 and the exhaust gas 103 which is introduced into the absorber 100. An exhaust port 108 is disposed at the top end of the absorber 100 to exhaust the exhaust gas 103 having the carbon dioxide absorbed by passing through the packing 107 to the atmosphere.

Besides, the alkaline solution discharge port 101 for discharging the alkaline solution 160 having absorbed the carbon dioxide is disposed at the bottom of the absorber 100 . The alkaline solution discharge port 101 is connected to one end of the alkaline solution reflux line 120a on which a delivery pump 151 is provided. The other end of the alkaline solution reflux line 120a is branched in correspondence with the divided split tanks 130a, 130b, and the branched ends of the alkaline solution reflux line 120a each are provided with a valve 170.

Besides, the individual split tanks 130a, 130b each have a valve 171, and the alkaline solution reflux line 120b which has its one end branched in correspondence with the individual split tanks 130a, 130b is disposed. The branched ends of the alkaline solution reflux line 120b are dipped to reach a relatively lower part in the alkaline solution stored in the individual split tanks 130a, 130b. And, the other end of the alkaline solution reflux line 120b is connected to the alkaline solution introduction port 102 of the absorber 100. The alkaline solution reflux line 120b is provided with the feed pump 150 for feeding under pressure the alkaline solution 160 to the absorber 100.

For example, the valve 170 and the valve 171 corresponding to the split tank 130a are opened and the valve 170 and the valve 171 corresponding to the split tank 130b are closed to form an alkaline solution reflux path for circulating the alkaline solution 160 through the absorber 100, the alkaline solution reflux line 120a, the split tank 130a, the alkaline solution reflux line 120b and the absorber 100 sequentially.

The feed pump 150, the delivery pump 151 and the individual valves 170, 171 operate according to the signal from the control section 140 to adjust the flow rate and the like of the alkaline solution 160 flowing through the alkaline solution reflux path.

The alkaline solution 160 which is jetted from the alkaline solution jet part 106 is preferably jetted uniformly. For example, a spray nozzle or the like capable of providing a specified sprayed particle diameter and spray pattern may be used for the alkaline solution jet part 106. If the alkaline solution 160 can be dispersed almost uniformly within the absorber 100 by virtue of the structure of the alkaline solution introduction port 102, the alkaline solution jet part 106 is not required to be disposed.

The packing 107 is formed of a material having, for example, a porous structure, a honeycomb structure or the like and sufficient if it has an action to stir the alkaline solution 160 passing through the packing 107. And, the packing 107 may be disposed in multiple stages within the absorber 100. For example, in a case where the packing 107 is disposed in multiple stages, the alkaline solution jet part 106 for jetting the alkaline solution 160 may be disposed in the individual stages. If the gas-liquid contact between the exhaust gas 103 and the alkaline solution 160 can be made efficiently within the absorber 100, the absorber 100 can be configured without the packing 107.

Then, the alkaline solution reflux path for refluxing the regenerated alkaline solution being discharged from the regenerated alkaline solution discharge port 111 of the regenerator 110 to the alkaline solution jet port 112 will be described.

The individual split tanks 130a, 130b of the storage tank 130 each are provided with a valve 172, and the alkaline solution reflux line 121a which has its one end branched in correspondence with the individual split tanks 130a, 130b is disposed. Meanwhile, the other end of the alkaline solution reflux line 121a is connected to the regenerated alkaline solution discharge port 111 of the regenerator 110. And, the alkaline solution reflux line 121a is provided with a delivery pump 152.

Besides, the individual split tanks 130a, 130b each are provided with a valve 173, and the alkaline solution reflux line 121b having one end branched in correspondence with the individual split tanks 130a, 130b is disposed. The branched ends of the alkaline solution reflux line 121b are desirably located at a relatively lower part in the alkaline solution stored in the individual split tanks 130a, 130b. For example, they may be disposed at the bottom of the individual split tanks 130a, 130b as shown in Fig. 1. Meanwhile, the other end of the alkaline solution reflux line 121b is connected to the alkaline solution jet port 112 of the regenerator 110. And, the alkaline solution reflux line 121b is provided with a high-pressure feed pump 153 which feeds under pressure an alkaline solution 161 to the regenerator 110.

For example, the valve 172 and the valve 173 corresponding to the split tank 130b are opened and the valve 172 and the valve 173 corresponding to the split tank 130a are closed to form an alkaline solution reflux path for circulating the alkaline solution 161 through the regenerator 110, the alkaline solution reflux line 121a, the split tank 130b, the alkaline solution reflux line 121b and the regenerator 110 sequentially. Opening and closing of the valve 170, the valve 171, the valve 172 and the valve 173 can be switched to form an alkaline solution reflux path for circulating the alkaline solution 160 through the absorber 100, the alkaline solution reflux line 120a, the split tank 130b, the alkaline solution reflux line 120b and the absorber 100 sequentially.

The number of split tanks configuring the storage tank 130 is not limited but, for example, the provision of at least two of them can simultaneously form the alkaline solution reflux path for circulating the alkaline solution 160 through the absorber 100, the alkaline solution reflux line 120a, the split tank 130a, the alkaline solution reflux line 120b and the absorber 100 sequentially, and the alkaline solution reflux path for circulating the alkaline solution 161 through the regenerator 110, the alkaline solution reflux line 121a, the split tank 130b, the alkaline solution reflux line 121b and the regenerator 110 sequentially and can operate the carbon dioxide absorption line and the carbon dioxide recovery line continuously.

The delivery pump 152, the high-pressure feed pump 153 and the individual valves 172, 173 operate according to the signal from the control section 140 to adjust the flow rate and the like of the alkaline solution 161 flowing through the alkaline solution reflux path.

A carbon dioxide discharge port 113 for externally removing carbon dioxide which is diffused by circulating the alkaline solution 161 having absorbed the carbon dioxide is formed at an upper part of the regenerator 110. The carbon dioxide discharge port 113 is connected to a carbon dioxide recovery line 115 having a suction pump 114. The carbon dioxide diffused in the regenerator 110 is recovered by carbon dioxide recovery means (not shown), which is disposed outside, through the carbon dioxide recovery line 115.

The regenerator 110 is configured of a flashing tank, and its interior is set to a pressure of -80 to -20 kPa in relative pressure assuming that the atmospheric pressure is zero. A discharge pressure of the high-pressure feed pump 153 to feed under pressure the alkaline solution 161 to the regenerator 110 is set to a pressure of 200 to 500 kPa in relative pressure assuming that the atmospheric pressure is zero. The regenerator 110 may be configured of a diffusion tower which has a structure to pass steam into the alkaline solution.

The alkaline solution used in the first embodiment is adjusted to a weight concentration of 9 to 22% by dissolving 10 to 28g of sodium carbonate into 100g of water. The weight concentration of sodium carbonate is adjusted to 9 to 22% because if the weight concentration is less than 9%, carbon dioxide cannot be absorbed for a long time, and if the weight concentration is more than 22%, a carbon dioxide absorption velocity lowers considerably.

When the alkaline solution reflux path is formed to circulate the alkaline solution 160 through the absorber 100, the alkaline solution reflux line 120a, the split tank 130a, the alkaline solution reflux line 120b and the absorber 100 sequentially, the alkaline solutions 160 in the absorber 100 and the split tank 130a are set to a temperature of 60 to 75°C. The alkaline solutions 160 in the absorber 100 and the split tank 130a preferably have a temperature of 60 to 70°C but can be used when their temperature is 40°C or more even if their temperature is 60°C or less.

When the alkaline solution reflux path is formed to circulate the alkaline solution 161 through the regenerator 110, the alkaline solution reflux line 121a, the split tank 130b, the alkaline solution reflux line 121b and the regenerator 110 sequentially, the alkaline solutions 161 in the regenerator 110 and the split tank 130b are set to a temperature of 60 to 75°C.

Here, the temperatures of the alkaline solutions 160 in the absorber 100 and the split tank 130a are set to a desirable range of 60 to 75°C, but they can be used when their temperature is 40°C or more even if their temperature is 60°C or less. It is because when the alkaline solution 160 which has sodium carbonate as a main solute is less than 60°C, the absorption of carbon dioxide into the alkaline solution 160 might become slow, and the absorption velocity lowers conspicuously if the temperature becomes lower than 40°C. And, if the alkaline solution 160 has a temperature of exceeding 75°C, the carbon dioxide absorbed by the alkaline solution 160 is started to diffuse.

The alkaline solutions 161 in the regenerator 110 and the split tank 130b are set to a temperature in a range of 60 to 75°C, because the alkaline solutions 161 having sodium carbonate as a main solute might become slow to release the carbon dioxide if the temperature is less than 60°C. And, if the temperature of the alkaline solution 161 exceeds 75°C, a large amount of water content is lost from the alkaline solution 161.

The alkaline solutions 160, 161 can be heated by, for example, using exhaust heat of the exhaust gas from the power generation boiler for the alkaline solution reflux lines 120a, 120b, 121a, 121b. The method of heating the alkaline solutions 160, 161 is not limited to the above. For example, a heat exchanger may be disposed within the split tanks 130a, 130b to heat by using the exhaust heat of the exhaust gas from the power generation boiler.
And, when the thermal efficiency of the system is considered as a heating source, it is desirable to use the exhaust heat of the exhaust gas from the power generation boiler, but a heater or the like may be used as the heating source. Besides, cooling means may be disposed within the split tanks 130a, 130b to adjust the temperature to an optimum value.

It is not shown in the drawing but one end of a measuring line for guiding the alkaline solutions 160, 161 to a pH meter for measuring hydrogen ion exponent pH of the alkaline solutions 160, 161 is connected to the individual split tanks 130a, 130b. The pH meter is electrically connected to the control section 140 and outputs a signal based on the measured result to the control section 140.

Then, the operation of the carbon dioxide recovery system 10 will be described.

The action of the carbon dioxide recovery system 10 will be described assuming that an alkaline solution, which has a weight concentration adjusted to 9 to 22% by dissolving 10 to 28g of sodium carbonate in 100g of water, is stored in the split tank 130a and the split tank 130b when the carbon dioxide recovery system 10 is operated. When the carbon dioxide recovery system 10 is operated, the valve 170 and the valve 171 corresponding to the split tank 130a are opened and the valve 170 and the valve 171 corresponding to the split tank 130b are closed to form an alkaline solution reflux path for circulating the alkaline solution 160 through the absorber 100, the alkaline solution reflux line 120a, the split tank 130a, the alkaline solution reflux line 120b and the absorber 100 sequentially.

The exhaust gas 103 exhausted from a thermal power plant, a municipal waste incineration plant or the like is supplied by the gas blower 105 from the exhaust gas introduction port 104 into the absorber 100 without being desulfurized. The exhaust gas 103 being supplied into the absorber 100 has a temperature of 50 to 120°C.

When the exhaust gas 103 is supplied into the absorber 100, the alkaline solution 160 housed in the split tank 130a is supplied to the alkaline solution introduction port 102 through the alkaline solution reflux line 120b and jetted from the alkaline solution jet part 106. The flow rate of the alkaline solution 160 being jetted from the alkaline solution jet part 106 is adjusted by the feed pump 150 which is controlled according to the signal from the control section 140.

The alkaline solution 160 jetted from the alkaline solution jet part 106 comes into gas-liquid contact with the exhaust gas 103, which is flowing from a lower part to an upper part within the packing 107, while flowing down along the packing 107 to absorb carbon dioxide and sulfur oxide contained in the exhaust gas 103. The alkaline solution 160 having absorbed the carbon dioxide and the sulfur oxide flows down to the bottom of the absorber 100. Meanwhile, the carbon dioxide remains partly in the exhaust gas 103 without being absorbed and discharged to the atmosphere through the exhaust port 108.

The alkaline solution 160 having fallen through the packing 107 is guided to the alkaline solution reflux line 120a by the delivery pump 151 and supplied to the split tank 130a configuring the storage tank 130.

Besides, the alkaline solution 160 guided to the split tank 130a is guided to the alkaline solution reflux line 120b by the feedpump 150 and supplied to the alkaline solution introduction port 102.

As described above, the alkaline solution 160 is circulated through the absorber 100, the alkaline solution reflux line 120a, the split tank 130a, the alkaline solution reflux line 120b and the absorber 100 sequentially, so that the carbon dioxide and the sulfur oxide contained in the exhaust gas 103 are efficiently absorbed by the alkaline solution 160.

In the split tank 130a, the refluxed alkaline solution 160 is partly guided to the pH meter through a measurement line (not shown). The pH meter detects hydrogen ion exponent pH of the guided alkaline solution 160 and outputs a signal corresponding to the detected value to the control section 140.

According to the signal from the pH meter, the control section 140 judges whether or not the pH value of the alkaline solution 160 in the split tank 130a is in a range of 8.5 to 9.5. The alkaline solution 160 which absorbs the carbon dioxide contained in the exhaust gas 103 becomes a solution containing sodium hydrogencarbonate, and the pH value lowers from 11 or more.

When it is judged by the control section 140 that the pHvalue of the alkaline solution 160 is larger than 9.5, the alkaline solution 160 guided to the split tank 130a is guided again to the alkaline solution reflux line 120b by the feed pump 150 and supplied to the alkaline solution introduction port 102. Thus, the above described reflux operation is repeated.

Meanwhile, when it is judged by the control section 140 that the pH value of the alkaline solution 160 is in a range of 8.5 to 9.5, the control section 140 controls to close the valve 170 corresponding to the split tank 130a disposed on the alkaline solution reflux line 120a and the valve 171 corresponding to the split tank 130a disposed on the alkaline solution reflux line 120b and also controls to open the valve 170 corresponding to the split tank 130b disposed on the alkaline solution reflux line 120a and the valve 171 corresponding to the split tank 130b disposed on the alkaline solution reflux line 120b.

Thus, opening and closing of the valve 170 and the valve 171 are switched to form the alkaline solution reflux path for circulating the alkaline solution 160 through the absorber 100, the alkaline solution reflux line 120a, the split tank 130b, the alkaline solution reflux line 120b and the absorber 100 sequentially. And, the alkaline solution 160 stored in the split tank 130b is refluxed through the alkaline solution reflux path, and the above-described reflux operation to absorb the carbon dioxide is repeated.

Subsequently, the control section 140 opens the valve 172 and the valve 173 corresponding to the split tank 130a to form the alkaline solution reflux path for circulating the alkaline solution 161 through the regenerator 110, the alkaline solution reflux line 121a, the split tank 130a, the alkaline solution reflux line 121b and the regenerator 110 sequentially. This alkaline solution 161 is an alkaline solution which is judged having a pH value in a range of 8.5 to 9.5 and stored in the split tank 130a.

The alkaline solution 161 housed in the split tank 130a is guided to the alkaline solution jet port 112 of the regenerator 110 through the alkaline solution reflux line 121b by the high-pressure feed pump 153. The alkaline solution 161 guided to the alkaline solution jet port 112 is jetted into the regenerator 110 which is in a decompressed state by a discharge pressure provided by the high-pressure feed pump 153 and discharges carbon dioxide. The flow rate of the alkaline solution 161 jetted from the alkaline solution jet port 112 is adjusted by the high-pressure feed pump 153 which is controlled according to the signal from the control section 140.

The alkaline solution 161 jetted into the regenerator 110 is guided by the delivery pump 152 from the regenerated alkaline solution discharge port 111 which is disposed on the bottom of the regenerator 110 to the split tank 130a through the alkaline solution reflux line 121a.

Here, the carbon dioxide discharged into the regenerator 110 is sucked by the suction pump 114 and guided to and recovered by a carbon dioxide recovery means (not shown) from the carbon dioxide discharge port 113 disposed at an upper part of the regenerator 110 through the carbon dioxide recovery line 115.

Besides, the alkaline solution 161 guided to the split tank 130a is guided by the high-pressure feedpump 153 to the alkaline solution jet port 112 of the regenerator 110 through the alkaline solution reflux line 121b, and the above-described reflux operation is repeated. Thus, the carbon dioxide can be discharged efficiently from the alkaline solution 161 by circulating the alkaline solution 161 through the regenerator 110, the alkaline solution reflux line 121a, the split tank 130a, the alkaline solution reflux line 121b and the regenerator 110 sequentially.

Here, the refluxed alkaline solution 161 in the split tank 130a is partly guided to the pH meter through a measurement line (not shown) . The pH meter detects hydrogen ion exponent pH of the guided alkaline solution 161 and outputs a signal corresponding to the detected value to the control section 140.

According to the signal from the pH meter, the control section 140 judges whether or not the pH value of the alkaline solution 160 in the split tank 130a is in a range of 11 to 12. The carbon dioxide is discharged from the alkaline solution 161, so that the pH value of the alkaline solution 161 becomes closer to the pH value of the original alkaline solution prior to the absorption of the carbon dioxide.

When it is judged by the control section 140 that the pHvalue of the alkaline solution 161 is smaller than 11, the alkaline solution 161 guided to the split tank 130a is guided again to the alkaline solution jet port 112 of the regenerator 110 by the high-pressure feed pump 153 through the alkaline solution reflux line 121b. Thus, the above-described reflux operation is repeated.

Meanwhile, when it is judged by the control section 140 that the pH value of the alkaline solution 161 is in a range of 11 to 12, the control section 140 controls to stop the delivery pump 152 disposed on the alkaline solution reflux line 121a and the high-pressure feed pump 153 disposed on the alkaline solution reflux line 121b. It also controls to close the valve 172 corresponding to the split tank 130a disposed on the alkaline solution reflux line 121a and the valve 173 corresponding to the split tank 130a disposed on the alkaline solution reflux line 121b.

Subsequently, the control section 140 judges whether or not the hydrogen ion exponent pH indicated by the pH meter of the alkaline solution 160 in the split tank 130b of the alkaline solution reflux path for circulating the alkaline solution 160 through the above-described absorber 100, alkaline solution reflux line 120a, split tank 130b, alkaline solution reflux line 120b and absorber 100 sequentially is in a range of 8.5 to 9.5.

When it is judged by the control section 140 that the pH value of the alkaline solution 160 is larger than 9.5 , the alkaline solution 160 guided to the split tank 130b is guided again to the alkaline solution reflux line 120b by the feed pump 150 and supplied to the alkaline solution introduction port 102. Thus, the above-described reflux operation is repeated.

Meanwhile, when it is judged by the control section 140 that the pH value of the alkaline solution 160 is in a range of 8.5 to 9.5, the control section 140 controls to close the valve 170 corresponding to the split tank 130b disposed on the alkaline solution reflux line 120a and the valve 171 corresponding to the split tank 130b disposed on the alkaline solution reflux line 120b and also controls to open the valve 170 corresponding to the split tank 130a disposed on the alkaline solution reflux line 120a and the valve 171 corresponding to the split tank 130a disposed on the alkaline solution reflux line 120b. Besides, the control section 140 controls to open the valve 172 and the valve 173 corresponding to the split tank 130b.

By the operation of switching opening and closing of the valves, the regenerated alkaline solution stored in the split tank 130a is guided to the alkaline solution reflux path for circulating the alkaline solution 160 through the absorber 100, the alkaline solution reflux line 120a, the split tank 130a, the alkaline solution reflux line 120b and the absorber 100 sequentially, and the operation of absorbing the carbon dioxide and the sulfur oxide is performed again. Meanwhile, the alkaline solution having absorbed the carbon dioxide stored in the split tank 130b is guided to the alkaline solution reflux path for circulating the alkaline solution 161 through the regenerator 110, the alkaline solution reflux line 121a, the split tank 130b, the alkaline solution reflux line 121b and the regenerator 110 sequentially to discharge carbon dioxide again and regenerated to the original alkaline solution.

Here, the alkaline solution 160 absorbs the sulfur oxide contained in the exhaust gas 103 in addition to the absorption of the carbon dioxide, and when the alkaline solution 160 is used for a long period, sulfite ions accumulate in the alkaline solution 160. The accumulation of sulfite ions is not desirable from the viewpoint of lowering a recovery rate of the carbon dioxide. For example, it is desirable to configure such that when a concentration of sulfite ions contained in the alkaline solution 160 in the split tank 130a reaches 0.5% in weight concentration, calcium chloride is added to the split tank 130a to deposit sulfite ions as calcium sulfite, and it is removed from the split tank 130a.

The concentration of sulfite ions contained in the alkaline solution 160 when the calcium chloride is added is not limited to 0.5% in weight concentration but may be in a range of 0.01 to 1.0%. The reason of setting the concentration of sulfite ions contained in the alkaline solution 160 at the time of addition of calcium chloride to the range of 0.01 to 1.0% is that, if the concentration of sulfite ions is less than 0.01% in weight concentration, its recovery as calcium sulfate (gypsum) is difficult, and if it is larger than 1.0%, a carbon dioxide recovery rate lowers. The addition of calcium chloride causes to deposit not only calcium sulfite but also calcium hydrogencarbonate.

For example, the concentration of sulfite ions is measured by an ion concentration measuring device such as an ion chromatography connected through aline branched from a measurement line (not shown) disposed on the individual split tanks 130a, 130b. The ion concentration measuring device is electrically connected to the control section 140, and the measured information of the concentration of sulfite ions is output to the control section 140.

And, a fresh alkaline solution 160 is supplied into the split tank 130a where sulfite ions are removed as calcium sulfite.

As described above, the carbon dioxide recovery system 10 of the first embodiment can dispose separately and independently the alkaline solution reflux path for refluxing the alkaline solution being discharged from the alkaline solution discharge port 101 of the absorber 100 to the alkaline solution introduction port 102 to absorb carbon dioxide and the like, and the alkaline solution reflux path for refluxing the regenerated alkaline solution being discharged from the regenerated alkaline solution discharge port 111 of the regenerator 110 to the alkaline solution jet port 112 to discharge carbon dioxide so as to regenerate the alkaline solution. Thus, the flow rates of the alkaline solutions flowing through the individual alkaline solution reflux paths can be set respectively, and the reflux flow rates and the like of the alkaline solutions suitable to the carbon dioxide absorption operation and the alkaline solution regeneration operation can be set.

The carbon dioxide recovery system 10 of the first embodiment does not need to heat instantaneously the alkaline solution 161 by the regenerator 110 and decreases the flow rate of the alkaline solution 161 to regenerate the alkaline solution 161 by refluxing to the regenerator 110 plural times, so that it does not require a large heating device or a large heat quantity. Thus, the thermal efficiency of the system can be improved.

The carbon dioxide recovery system 10 can also recover an air pollutant sulfur oxide. Besides, the carbon dioxide recovery system 10 can recover a large amount of carbon dioxide being discharged from a thermal power plant, a municipal waste incineration plant, or the like without using excessive energy, thereby capable of contributing to prevention of global warming.

### (SECOND EMBODIMENT)

The carbon dioxide recovery system according to the second embodiment of the present invention uses a potassium carbonate solution as the alkaline solution of the carbon dioxide recovery system 10 of the above-described first embodiment. Therefore, the basic structure and operation of the carbon dioxide recovery system of the second embodiment are same as those of the carbon dioxide recovery system 10 of the first embodiment, so that the carbon dioxide recovery system of the second embodiment will be described with reference to Fig. 1, and descriptions overlapping those of the carbon dioxide recovery system 10 of the first embodiment will be omitted.

The alkaline solution used by the carbon dioxide recovery system of the second embodiment is prepared by adjusting a weight concentration to 9 to 30% by dissolving 10 to 43 g of potassium carbonate into 100 g of water. Here, the weight concentration of the potassium carbonate is set to 9 to 30% because if the weight concentration is less than 9%, the absorption of carbon dioxide cannot be continued for a long period, and if the weight concentration is larger than 30%, a carbon dioxide absorption velocity lowers considerably.

When the alkaline solution reflux path for circulating the alkaline solution 160 through the absorber 100, the alkaline solution reflux line 120a, the split tank 130a, the alkaline solution reflux line 120b and the absorber 100 sequentially is formed, the temperatures of the alkaline solutions 160 in the absorber 100 and the split tank 130a are set to about 55°C. And, when the alkaline solution reflux path for circulating the alkaline solution 161 through the regenerator 110, the alkaline solution reflux line 121a, the split tank 130b, the alkaline solution reflux line 121b and the regenerator 110 sequentially is formed, the temperatures of the alkaline solutions 161 in the regenerator 110 and the split tank 130b are set to about 100°C.

Here, the temperatures of the alkaline solutions 160 in the absorber 100 and the split tank 130a can also be set to about 55°C (e.g. , 50 to 60°C), but this temperature range can be set to fall in a large range of 40 to 75°C. Here, the temperatures of the alkaline solutions 160 in the absorber 100 and the split tank 130a are set to 40 to 75°C because if it is lower than 40°C, absorption of carbon dioxide into the alkaline solution 160 becomes considerably slow, and if it exceeds 75°C, a large amount of water content is removed from the alkaline solution 160.

The temperatures of the alkaline solutions 161 in the regenerator 110 and the split tank 130b are set to about 100°C (e.g., 90 to 110°C), because the alkaline solution 161 having potassium carbonate as a main solute is slow to discharge carbon dioxide if the temperature is considerably lower than 100°C, and if the temperature is considerably higher than 100°C, a large amount of steam is produced from the alkaline solution 161 even in a pressurized state.

There is a prescribed difference in temperature between the alkaline solution flowing through the alkaline solution reflux path to absorb carbon dioxide and the like by circulating the alkaline solution 160 through the absorber 100, the alkaline solution reflux line 120a, the split tank 130a, the alkaline solution reflux line 120b and the absorber 100 sequentially and the alkaline solution flowing through the alkaline solution reflux path to regenerate the alkaline solution by discharging the carbon dioxide by circulating the alkaline solution 161 through the regenerator 110, the alkaline solution reflux line 121a, the split tank 130b, the alkaline solution reflux line 121b and the regenerator 110 sequentially. Here, the split tank 130a and the split tank 130b may be insulated to independently adjust the temperatures of the alkaline solutions housed in the individual split tanks.

In the carbon dioxide recovery system of the second embodiment using a potassium carbonate solution as an alkaline solution, the same effects as those of the carbon dioxide recovery system 10 of the first embodiment can be obtained. In other words, it can dispose separately and independently the alkaline solution reflux path for refluxing the alkaline solution being discharged from the alkaline solution discharge port 101 of the absorber 100 to the alkaline solution introduction port 102 to absorb carbon dioxide and the like and the alkaline solution reflux path for refluxing the regenerated alkaline solution being discharged from the regenerated alkaline solution discharge port 111 of the regenerator 110 to the alkaline solution jet port 112 to discharge the carbon dioxide to regenerate the alkaline solution. Thus, the flow rates of the alkaline solutions flowing through the individual alkaline solution reflux paths can be set individually, and the reflux flow rates and the like of the alkaline solutions suitable for the carbon dioxide absorption operation and the alkaline solution regeneration operation can be set.

Besides, similar to a conventional carbon dioxide recovery system, this embodiment alternately flows the alkaline solution to the absorber and the regenerator, does not heat or cool through the heat exchanger in each case, and circulates through the same alkaline solution reflux path, for example, the alkaline solution reflux path for absorbing the carbon dioxide and the like or the alkaline solution reflux path for regenerating the alkaline solution until the prescribed treatment is terminated, so that the temperature control in the individual alkaline solution reflux paths is facilitated. When switching the passage of the alkaline solution to the alkaline solution reflux path to regenerate the alkaline solution from the alkaline solution reflux path for absorbing the carbon dioxide and the like, it is necessary to heat the alkaline solution, but it can be achieved by a single heating step, so that the temperature control is facilitated in comparison with the above-described conventional carbon dioxide recovery system that alternately repeats the heating step and the cooling step. Similarly, when the passage of the alkaline solution is switched from the alkaline solution reflux path for regenerating the alkaline solution to the alkaline solution reflux path for absorbing the carbon dioxide and the like, it is necessary to cool the alkaline solution, but it can be achieved by a single cooling step, so that the temperature control is facilitated in comparison with the above-described conventional carbon dioxide recovery system that alternately repeats the heating step and the cooling step.

The carbon dioxide recovery system of this embodiment does not need to heat the alkaline solution 161 by the regenerator 110 instantaneously. Besides, the flow rate of the alkaline solution 161 is decreased to regenerate the alkaline solution 161 by refluxing to the regenerator 110 plural times, so that a large heating device and large heat quantity are not required. Thus, the thermal efficiency of the system can be improved.

The carbon dioxide recovery system of this embodiment can also recover an air contaminant sulfur oxide. Besides, the carbon dioxide recovery system can recover a large amount of carbon dioxide being discharged from a thermal power plant, a municipal waste incineration plant, or the like without using excessive energy, so that it can contribute to prevention of global warming.

### (THIRD EMBODIMENT)

The carbon dioxide recovery system according to the third embodiment of the present invention uses an aqueous amine solution as the alkaline solution of the carbon dioxide recovery system 10 of the above-described first embodiment. Therefore, the basic structure and operation of the carbon dioxide recovery system of the third embodiment are same as those of the carbon dioxide recovery system 10 of the first embodiment, so that the carbon dioxide recovery system of the third embodiment will be described with reference to Fig. 1, and descriptions overlapping those of the carbon dioxide recovery system 10 of the first embodiment will be omitted.

The alkaline solution used by the carbon dioxide recovery system of the third embodiment is prepared by adjusting a weight concentration to 9 to 30% by dissolving 10 to 43 g of amine into 100 g of water. The amine used here includes monoethanolamine (MEA), 2-amino-2-methyl-1-propanol (AMP) and the like.

Here, the weight concentration of the amine is set to 9 to 30% because if the weight concentration is less than 9%, the absorption of carbon dioxide cannot be continued for a long period, and if the weight concentration is larger than 30%, a carbon dioxide absorption velocity lowers considerably.

When the alkaline solution reflux path for circulating the alkaline solution 160 through the absorber 100, the alkaline solution reflux line 120a, the split tank 130a, the alkaline solution reflux line 120b and the absorber 100 sequentially is formed, the temperatures of the alkaline solutions 160 in the absorber 100 and the split tank 130a are set to about 55°C. And, when the alkaline solution reflux path for circulating the alkaline solution 161 through the regenerator 110, the alkaline solution reflux line 121a, the split tank 130b, the alkaline solution reflux line 121b and the regenerator 110 sequentially is formed, the temperatures of the alkaline solutions 161 in the regenerator 110 and the split tank 130b are set to about 120°C.

Here, the temperatures of the alkaline solutions 160 in the absorber 100 and the split tank 130a can also be set to about 55°C (e.g., 50 to 60°C), but the temperature range can be set to fall in a large range of 40 to 75°C. Here, the temperatures of the alkaline solutions 160 in the absorber 100 and the split tank 130a are set to 40 to 75°C because, if the temperature is lower than 40°C, absorption of the carbon dioxide into the alkaline solution 160 becomes slow considerably, and if it exceeds 75°C, a large amount of water content and the amine are eliminated considerably from the alkaline solution 160.

And, the temperatures of the alkaline solutions 161 in the regenerator 110 and the split tank 130b are set to about 120°C (e.g. , 110 to 130°C) because, if the temperature is considerably lower than 120°C, the alkaline solution 161 which has the amine as a main solute is slow to discharge the carbon dioxide, and if it largely exceeds 120°C, a large amount of steam is produced from the alkaline solution 161 even in a pressurized state.

And, a prescribed difference in temperature is caused between the alkaline solution, which flows through the alkaline solution reflux path for absorbing carbon dioxide and the like by circulating the alkaline solution 160 through the absorber 100, the alkaline solution reflux line 120a, the split tank 130a, the alkaline solution reflux line 120b and the absorber 100 sequentially, and the alkaline solution, which flows through the alkaline solution reflux path for regenerating the alkaline solution by circulating the alkaline solution 161 through the regenerator 110, the alkaline solution reflux line 121a, the split tank 130b, the alkaline solution reflux line 121b and the regenerator 110 sequentially to discharge carbon dioxide.

Here, the split tank 130a and the split tank 130b may be insulated to independently adjust the temperatures of the alkaline solutions housed in the individual split tanks.

In the carbon dioxide recovery system of the third embodiment using an amine as a main solute of the alkaline solution, the same effects as those of the carbon dioxide recovery system 10 of the first embodiment can be obtained. In other words, it can dispose separately and independently the alkaline solution reflux path for refluxing the alkaline solution being discharged from the alkaline solution discharge port 101 of the absorber 100 to the alkaline solution introduction port 102 to absorb carbon dioxide and the like and the alkaline solution reflux path for refluxing the regenerated alkaline solution being discharged from the regenerated alkaline solution discharge port 111 of the regenerator 110 to the alkaline solution jet port 112 so as to discharge the carbon dioxide to regenerate the alkaline solution. Thus, the flow rates of the alkaline solutions flowing through the individual alkaline solution reflux paths can be set individually, and the reflux flow rates and the like of the alkaline solutions suitable for the carbon dioxide absorption operation and the alkaline solution regeneration operation can be set.

Besides, similar to a conventional carbon dioxide recovery system, this embodiment alternately flows the alkaline solution to the absorber and the regenerator, does not heat or cool through the heat exchanger in each case, and circulates through the same alkaline solution reflux path, for example, the alkaline solution reflux path for absorbing the carbon dioxide and the like or the alkaline solution reflux path for regenerating the alkaline solution until the prescribed treatment is terminated, so that the temperature control in the individual alkaline solution reflux paths is facilitated. When switching the passage of the alkaline solution to the alkaline solution reflux path to regenerate the alkaline solution from the alkaline solution reflux path for absorbing the carbon dioxide and the like, it is necessary to heat the alkaline solution, but it can be achieved by a single heating step, so that the temperature control is facilitated in comparison with the above-described conventional carbon dioxide recovery system that alternately repeats the heating step and the cooling step. Similarly, when the passage of the alkaline solution is switched from the alkaline solution reflux path for regenerating the alkaline solution to the alkaline solution reflux path for absorbing the carbon dioxide and the like, it is necessary to cool the alkaline solution, but it can be achieved by a single cooling step, so that the temperature control is facilitated in comparison with the above-described conventional carbon dioxide recovery system that alternately repeats the heating step and the cooling step.

And, the carbon dioxide recovery system of this embodiment does not need to heat the alkaline solution 161 by the regenerator 110 instantaneously. Besides, the flow rate of the alkaline solution 161 is decreased to regenerate the alkaline solution 161 by refluxing to the regenerator 110 plural times, so that a large heating device and large heat quantity are not required. Thus, the thermal efficiency of the system can be improved.

The carbon dioxide recovery system can recover a large amount of carbon dioxide being discharged from a thermal power plant, a municipal waste incineration plant, or the like without using excessive energy, so that it can contribute to prevention of global warming.

### (FOURTH EMBODIMENT)

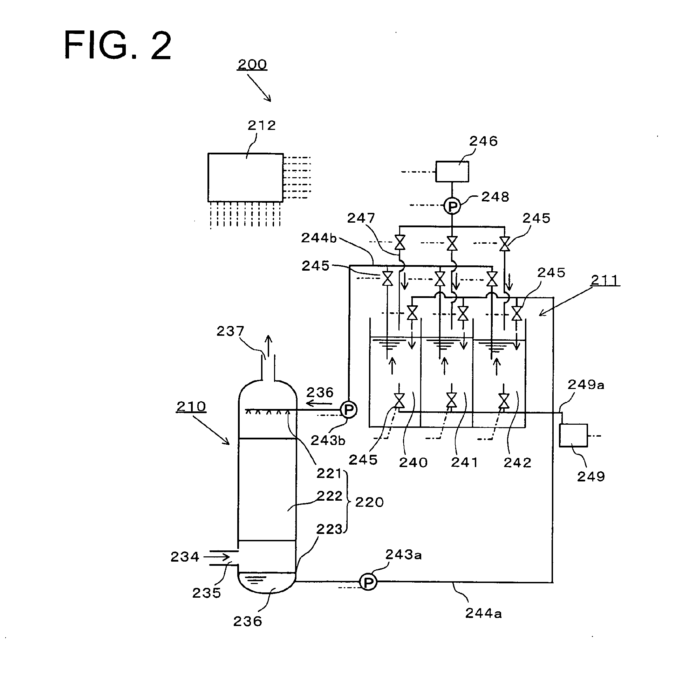

Fig. 2 shows a general view of a carbon dioxide recovery system 200 according to the fourth embodiment of the present invention.

The carbon dioxide recovery system 200 according to the fourth embodiment of the present invention is mainly comprised of an absorber 210, a collection tank 211, and a control section 212. The control section 212 in Fig. 2 is electrically connected to individual pumps, individual valves, a pH meter which functions as a hydrogen ion exponent measuring device described later, but their connection lines are omitted for convenience of clear illustration.

An exhaust gas supply part 235 for guiding an exhaust gas 234 containing carbon dioxide, which is exhausted from a thermal power plant, a municipal waste incineration plant, or the like, into the absorber 210 is disposed at a lower part of the absorber 210. And, an absorption section 220 for absorbing carbon dioxide from the exhaust gas 234 which is introduced from the exhaust gas supply part 235 is disposed within the absorber 210. Besides, an exhaust port 237 for exhausting to the atmosphere the exhaust gas 234 from which the carbon dioxide is absorbed by passing through the absorption section 220 is disposed at the top of the absorber 210.

The absorption section 220 has therein an alkaline solution jet part 221 for jetting an alkaline solution 236 being supplied from the collection tank 211 by a pump 243b, a packing 222 for mainly performing gas-liquid contact between the alkaline solution 236 jetted from the alkaline solution jet part 221 and the exhaust gas 234 introduced into the absorber 210, and an alkaline solution storage part 223 for storing the alkaline solution 236 containing an insoluble compound which is a reaction product produced as a result of absorption of carbon dioxide contained in the exhaust gas by the alkaline solution 236 which falls from the packing 222.

It is desirable that the alkaline solution 236 is uniformly jetted from the alkaline solution jet part 221, and the alkaline solution jet part 221 may be, for example, a spray nozzle which provides a specified sprayed particle diameter and spray pattern.

Here, the packing 222 is formed of, for example, a porous structure, a honeycomb structure or the like and may have any structure if it functions to disturb the alkaline solution 236 which passes through the absorption section 220. And, the absorption section 220 may be configured without having the packing 222 if the gas-liquid contact can be made efficiently between the exhaust gas 234 and the alkaline solution 236.

The alkaline solution storage part 223 has a pump 243a and is connected to the collection tank 211 through a circulation pipe 244a which serves as an alkaline solution reflux line. The pump 243a is electrically connected to the control section 212 and adjusts the flowrate of the alkaline solution 236 being supplied from the alkaline solution storage part 223 to the collection tank 211 according to a signal from the control section 212.

The collection tank 211 is comprised of plural split tanks 240, 241, 242 into which the alkaline solution 236 is supplied from the alkaline solution storage part 223. The other end of the circulation pipe 244a of which one end is connected to the alkaline solution storage part 223 is divided into plural in correspondence with the split tanks 240, 241, 242 and disposed in the individual split tanks 240, 241, 242. And, the branched ends of the circulation pipe 244a are provided with a valve 245. The valve 245 is electrically connected to the control section 212 and switches the supply of the alkaline solution 236 to the individual split tanks 240, 241, 242 according to the signal from the control section 212.

And, the individual split tanks 240, 241, 242 are provided with the valve 245, and a circulation pipe 244b which has its one end branched in correspondence with the individual split tanks 240, 241, 242 and functions as an alkaline solution reflux line is disposed. The branched ends of the circulation pipe 244b are positioned at a relatively higher part within the individual split tanks 240, 241, 242. Thus, when the alkaline solution 236 is circulated from the individual split tanks 240, 241, 242, insoluble compounds which deposit on the bottoms of the individual split tanks 240, 241, 242 can be prevented from being sucked up.

The other end of the circulation pipe 244b is connected to the alkaline solution jet part 221. The circulation pipe 244b is provided with the pump 243b, and the pump 243b is electrically connected to the control section 212 and adjusts according to the signal from the control section 212 the flow rates of the alkaline solutions 236 being supplied from the individual split tanks 240, 241, 242 to the alkaline solution jet part 221.

The individual split tanks 240, 241, 242 are provided with an alkaline solution inlet pipe 247 having a pump 248 for guiding the alkaline solution 236 being supplied from a alkaline solution replenishing section 246. The pump 248 is electrically connected to the control section 212 and adjusts according to the signal from the control section 212 the flow rates of the alkaline solutions being supplied to the individual split tanks 240, 241, 242. And, the individual alkaline solution inlet pipes 247 are provided with the valve 245, and the individual valves 245 are electrically connected to the control section 212 and control according to the signal from the control section 212 the flow rates of the alkaline solutions 236 being supplied to the individual split tanks 240, 241, 242.

Besides, the individual split tanks 240, 241, 242 are provided with a measuring pipe 249a for guiding the alkaline solution 236 to a pH meter 249 for measuring hydrogen ion exponent pH of the alkaline solution 236, and the individual measuring pipes 249a are provided with the valve 245. The pH meter 249 is electrically connected to the control section 212 and outputs a signal according to the measured result to the control section 212.

The alkaline solution 236 has an alkali material sodium carbonate or sodium hydroxide dissolved in water. Where sodium carbonate is used as an alkali material, 10 to 28 g of sodium carbonate is dissolved in 100g of water to adjust the weight concentration to 9 to 22%. Here, the weight concentration of the sodium carbonate is set to 9 to 22% because, if the weight concentration is lower than 9%, the absorption of the carbon dioxide does not continue for a long period, and the insoluble compound sodium hydrogencarbonate does not deposit, and if the weight concentration is larger than 22%, the carbon dioxide absorption velocity lowers considerably.

The sodium carbonate may be sodium carbonate containing impurities collected from, for example, coal ash, municipal waste incineration ash, sewage sludge incineration ash, biomass incineration ash and the like. The sodium carbonate may also be sodium carbonate containing impurities collected from, for example, soil containing an alkaline component such as desert. In addition, the sodium carbonate maybe sodium carbonate containing impurities collected from, for example, water of an alkali lake by a process for manufacturing salt by solar evaporation. A weight of impurities is not included in the weight concentration (9 to 22%) of the sodium carbonate.

Where 40 chemical equivalents of sodium hydroxide is used as an alkali material, 8 to 21 g of sodium hydroxide is dissolved in 100 g of water, and a weight concentration is adjusted to 9 to 22% in terms of 53 chemical equivalents of sodium carbonate. The sodium hydroxide may be produced by, for example, desalination of seawater by an ion-exchange membrane.

In a case where a mixture of sodium carbonate and sodium hydroxide is used as an alkali material, the weight concentration is adjusted to 9 to 22% in terms of sodium carbonate.

In the absorber 210, it is desirable that the alkaline solution 236 has a temperature of 60 to 75°C, but it can be used even if its temperature is 60°C or less when the temperature is 40°C or more. Here, it is determined that the temperature of the alkaline solution 236 in the absorber 210 is in the preferable range of 60 to 75°C and it can be used even if its temperature is 60°C or less when the temperature is 40°C or more. It is because if the temperature is less than 60°C, the absorption of carbon dioxide to the alkaline solution 236 might become slow, and if the temperature becomes lower than 40°C, the absorption velocity lowers considerably. And, if the temperature of the alkaline solution 236 exceeds 75°C, the sodium hydrogencarbonate dissolved in the alkaline solution 236 or the deposited sodium hydrogencarbonate starts to discharge carbon dioxide.

And, it is desirable that the temperature of the alkaline solution 236 is 60 to 75°C in the collection tank 211, but it can be used even if its temperature is 60°C or less when the temperature is 40°C or more. Here, it is determined that the temperature of the alkaline solution 236 in the collection tank 211 is in the preferable range of 60 to 75°C and it can be used even if its temperature is 60°C or less when the temperature is 40°C or more. It is because if the temperature is less than 40°C, the sodium hydrogencarbonate in the alkaline solution 236 deposits to adhere to the wall of the collection tank 211. And, if the temperature of the alkaline solution 236 exceeds 75°C, the sodium hydrogencarbonate dissolved in the alkaline solution 236 or the deposited sodium hydrogencarbonate starts to discharge the carbon dioxide.

The alkaline solution 236 can be heated by, for example, heating the circulation pipe 244a and the circulation pipe 244b by exhaust heat of the exhaust gas from the power generation boiler. The method of heating the alkaline solution 236 is not limited to the above. For example, a heat exchanger may be disposed within the collection tank 211 to heat by the exhaust heat of the exhaust gas from the power generation boiler. And, when the thermal efficiency of the system is considered, it is desirable to use the exhaust heat of the exhaust gas from the power generation boiler as a heating source, but a heater or the like may be used as the heating source.

Then, the operation of the carbon dioxide recovery system 200 will be described.

The exhaust gas 234 discharged from a thermal power plant, a municipal waste incineration plant, or the like is supplied into the absorber 210 through the exhaust gas supply part 235 without being desulfurized. When the exhaust gas 234 is supplied into the absorber 210, the alkaline solution 236 stored in the collection tank 211 is jetted from the alkaline solution jet part 221. A flow rate of the alkaline solution 236 jetted from the alkaline solution jet part 221 is adjusted by the pump 243 which is controlled according to the signal from the control section 212.

The alkaline solution 236 jetted from the alkaline solution jet part 221 comes into gas-liquid contact with the exhaust gas 234 flowing from a lower part to an upper part within the packing 222 while flowing down along the packing 222 to absorb carbon dioxide and sulfur oxide contained in the exhaust gas 234. And, the alkaline solution 236 which has absorbed the carbon dioxide and contains an insoluble compound (sodium hydrogencarbonate) which is a reaction product produced by absorbing the carbon dioxide contained in the exhaust gas flows down so to be stored in the alkaline solution storage part 223. And, the carbon dioxide is partly discharged into the atmosphere through the exhaust port 237 without being absorbed.

The alkaline solution 236 containing the insoluble compound stored in the alkaline solution storage part 223 is guided to the circulation pipe 244a by the pump 243a and supplied to the split tank 240 configuring the collection tank 211. At this time, the valves 245 other than the valve 245 corresponding to the split tank 240 into which the alkaline solution 236 is supplied are closed.

When the alkaline solution 236 containing the insoluble compound is supplied into the split tank 240, the insoluble compound deposits on the bottom of the collection tank because the insoluble compound has a specific gravity larger than that of the alkaline solution.

And, the valve 245 of the measuring pipe 249a disposed on the split tank 240 is opened, and the alkaline solution 236 is partly guided to the pH meter 249. The pH meter 249 detects a hydrogen ion exponent pH of the guided alkaline solution 236 and outputs the signal corresponding to the detected value to the control section 212.

The control section 212 judges according to the signal from the pH meter 249 whether a pH value of the alkaline solution 236 in the split tank 240 is in a range of 8 to 10. Upon absorbing the carbon dioxide contained in the exhaust gas 234, the alkaline solution 236 becomes a sodium hydrogencarbonate solution, and the pH value which was 11 or more lowers gradually to reach 9 or less as a result.

When it is judged by the control section 212 that the pH value of the alkaline solution 236 is larger than 8 to 10, the alkaline solution 236 is further lead to the split tank 240, and the alkaline solution 236 which did not contribute to the production of the insoluble compound is guided to the alkaline solution jet part 221 and jetted from the alkaline solution jet part 221. Thus, the same operation is repeated. At this time, the valves 245 disposed on the circulation pipe 244b are closed except the one corresponding to the split tank 240.

Meanwhile, when it is judged by the control section 212 that the pH value of the alkaline solution 236 is in a range of 8 to 10, the control section 212 controls to close the valve 245 which is disposed on the circulation pipe 244a corresponding to the split tank 240. And, the insoluble compound sodium hydrogencarbonate trapped on the bottom of the split tank 240 is taken out of the split tank 240. After the insoluble compound is removed, the control section 212 controls to open the valve 245 of the alkaline solution replenishing section 246 corresponding to the split tank 240 and to operate the pump 248. And, the alkaline solution 236 is supplied to the split tank 240.

When the pH value of the alkaline solution 236 stored in the split tank 240 lowers to about 8-10, the split tank storing the alkaline solution 236 is switched to the split tank 241, and the same operation as that using the above-described split tank 240 is performed. In this case, the valve 245 corresponding to the split tank 241 is opened. Besides, when the pH value of the alkaline solution 236 stored in the split tank 241 lowers to about 8 to 10, the split tank storing the alkaline solution 236 is switched to the split tank 242, and the same operation as that using the above-described split tank 240 is performed.

Here, when the alkaline solution 236 is used for a long period, sulfite ions accumulate. For example, when the concentration of sulfite ions contained in the alkaline solution 236 in the split tank 240 reaches 0.5% in weight concentration, calcium chloride is added to the split tank 240, sulfite ions become calcium sulfite and deposit, and carbonate ions become calcium carbonate and deposit. The remaining solution is removed, and a fresh alkaline solution 236 is supplied from the alkaline solution replenishing section 246.

The concentration of sulfite ions is measured by the ion concentration measuring device such as an ion chromatography (not shown) which is connected through a pipe branched from the measuring pipe 249a disposed on the split tank 240. And, the ion concentration measuring device is electrically connected to the control section 212, and the measured information of the concentration of sulfite ions is output to the control section 212.

As described above, the carbon dioxide recovery system 200 of the fourth embodiment recovers carbon dioxide as an insoluble compound and replenishes the alkaline solution 236 but does not regenerate it, so that thermal energy for regenerating the alkaline solution 236 is unnecessary, and the thermal efficiency of the system can be improved. Besides, an air contaminant sulfur oxide can also be recovered.

This embodiment can recover a large amount of carbon dioxide being discharged from a thermal power plant, a municipal waste incineration plant, or the like without using excessive energy, thereby capable of contributing to prevention of global warming. In addition to the sodium carbonate, inexpensive sodium carbonate containing impurities can be used to fix carbon dioxide as value-added sodium hydrogencarbonate.

Besides, this embodiment can easily produce an alkaline solution for absorbing carbon dioxide by using coal ash or the like to be disposed, so that a production cost is low, and the alkaline solution 236 is mass-produced with ease and canbe supplied in a large amount continuously. And, the coal ash or the like used for production of the alkaline solution 236 has alkaline components mostly removed. Therefore, even if it is disposed of in landfills and exposed to rain water and the like, elution of the alkaline components is limited to a very small level, and its effect on the environment is very little.

Where sodium carbonate produced from water of an alkali lake is used for the alkaline solution 236, a production cost is low, and the alkaline solution 236 can be mass-produced easily and can be supplied continuously in a large amount to the absorber and the like in the same way as the case that coal ash or the like is used. Because the sodium carbonate is normally present innature, it does not largely affect on the environment even if it leaks during transportation. Thus, safety can be enhanced in view of environment conservation.

In addition, where an alkaline component which is eluted from soil containing the alkaline component is used for the alkaline solution 236, a production cost is low, and the alkaline solution 236 can be mass-produced easily and can be supplied continuously in a large amount to the absorber 210 and the like in the same way as the case that coal ash or the like is used. Because the alkaline component which harms the agriculture is removed from soil, greening of the desert and the like can be assisted.

### (FIFTH EMBODIMENT)

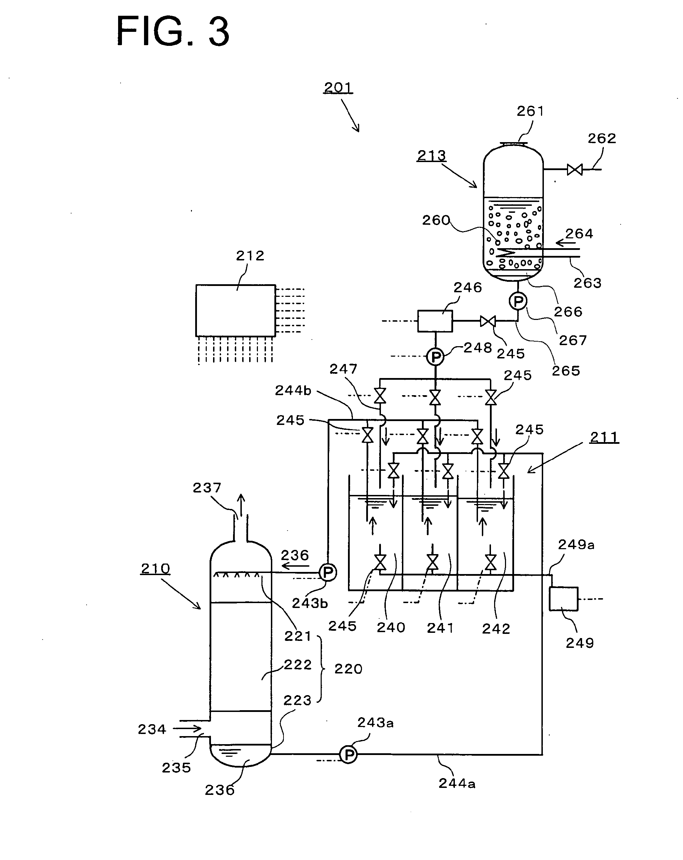

Fig. 3 is a general view of a carbon dioxide recovery system 201 of the fifth embodiment having a regenerator 213, which heats an insoluble compound 260 to regenerate an alkaline solution 236, added to the carbon dioxide recovery system 200 of the fourth embodiment of the present invention. Like parts as those of the carbon dioxide recovery system 200 of the fourth embodiment are denoted by like reference numerals, and overlapped descriptions will be omitted.

A charging port 261 for the insoluble compound 260, which is a reaction product of the alkaline solution 236 and carbon dioxide, and a carbon dioxide outlet line 262 are disposed at upper parts of the regenerator 213, and a hot water pipe 263, in which hot water circulates to heat the substance within the regenerator 213, is disposed at a lower part of the regenerator 213. The regenerator 213 is not connected to the circulation pipes 244a, 244b. And, an alkaline solution supply pipe 265, which is connected to the alkaline solution replenishing section 246 and has a pump 267 and a valve 245, is connected to the bottom of the regenerator 213. Beside, a filter 266 is disposed on the bottom of the regenerator 213 and has a mesh of a level not allowing the insoluble compound 260 to pass through it.

It is not shown in Fig. 3 but, for example, an insoluble compound supply pipe having pumps and valves is disposed between the bottoms of the individual split tanks 240, 241, 242 and the regenerator 213 to guide the insoluble compound 260 which is deposited on the bottoms of the individual split tanks 240, 241, 242 to the regenerator 213.

Then, an example operation of the carbon dioxide recovery system 201 will be described.

When it is judged by the control section 212 according to the signal from the pH meter 249 that the alkaline solution 236 has a pH value in a range of 8 to 10, the alkaline solution 236 containing the insoluble compound 260 is supplied from the split tank 240 of the collection tank 211 to the regenerator 213 through an insoluble compound supply pipe (not shown). At this time, the valve of the alkaline solution supply pipe 265 disposed at the bottom of the regenerator 213 is open.

And, the alkaline solution 236 containing the insoluble compound 260 supplied to the regenerator 213 is separated into the alkaline solution 236 and the insoluble compound 260 by the bottom filter 266 of the regenerator 213, and the alkaline solution 236 having passed through the filter 266 is returned to the split tank 240 by the alkaline solution replenishing section 146. At this time, the pump 267 disposed on the alkaline solution supply pipe 265 may be operated. The interior of the regenerator 213 has a pressure lower than the atmosphere pressure.

And, the valve 245 of the alkaline solution supply pipe 265 is closed in a state that a small amount of the alkaline solution 236 is present in the regenerator 213 to stop the supply of the alkaline solution 236 containing the insoluble compound 260 to the regenerator 213.

Subsequently, hot water 264 is guided through the hot water pipe 263. For example, when the alkaline solution 236 is sodium carbonate water and the insoluble compound 260 is sodium hydrogencarbonate containing a small amount of water, the hot water 264 is set to a temperature of 70 to 90°C.

The insoluble compound 260 (sodium hydrogencarbonate containing a small amount of water) starts to discharge carbon dioxide when its temperature is increased to 60°C or more by the hot water 264 under reduced pressure and is divided into carbon dioxide and an alkali material (sodium carbonate and a small amount of water). The regenerated alkali material dissolves in a specified amount of water to form the alkaline solution 236, which is supplied to the alkaline solution replenishing section 246 through the alkaline solution supply pipe 265. Meanwhile, carbon dioxide discharged in the regenerator 213 is collected through the carbon dioxide outlet line 262.

The carbon dioxide recovery system 201 performs repeatedly the regeneration of the alkaline solution 236 and the deposition of the insoluble compound 260.

The supply of the insoluble compounds 260 from the individual split tanks 240, 241, 242 to the regenerator 213 is not limited to the above-described method. For example, the insoluble compounds 260 can also be guided from the individual split tanks 240, 241, 242 to the regenerator 213 by the following method. The following method does not need the filter 266 which is disposed on the bottom of the regenerator 213.

An insoluble compound supply pipe (not shown) having pumps and valves is disposed between the bottoms of the individual split tanks 240, 241, 242 and the regenerator 213. A filter (not shown) of which both sides are reversible with respect to the flow is disposed at a specified part of the insoluble compound supply pipe. And, a return pipe (not shown) having a valve, which is branched from the insoluble compound supply pipe, is disposed near the regenerator 213 in relation to the filter-disposed position and branched so to be disposed at the individual split tanks 240, 241, 242.

In this case, when it is judged by the control section 212 according to the signal from the pH meter 249 that the alkaline solution 236 has a pH value in a range of 8 to 10, the alkaline solution 236 containing the insoluble compound 260 is supplied from the split tank 240 of the collection tank 211 to the regenerator 213 through the insoluble compound supply pipe.

To guide the insoluble compound 260 from the bottom of the split tank 240 to the regenerator 213, the alkaline solution 236 present in the split tank 240 is also guided together with the insoluble compound 260 through the insoluble compound supply pipe. The alkaline solution 236 containing the insoluble compound 2 60 is passed through a filter which is disposed within the insoluble compound supply pipe to separate the insoluble compound 260 and the alkaline solution 236. And, the alkaline solution 236 having passed through the filter is returned to the split tank 240 through the return pipe. At this time, the valve disposed between the regenerator 213 and the branched point of the return pipe of the insoluble compound supply pipe is closed.

Meanwhile, the insoluble compound 260 collected by the filter is guided to the regenerator 213 by the flow of the alkaline solution 236 by, for example, closing the valve disposed on the return pipe, reversing the direction of the filter and flowing the alkaline solution 116 from the split tank 240 to the filter.

The method of guiding the insoluble compounds 260 from the individual split tanks 240, 241, 242 to the regenerator 213 is not limited to the above-described one. Another method of scooping the insoluble compounds 260 from the individual split tanks 240, 241, 242 and supplying to the regenerator 213 through the charging port 261 disposed at the top of the regenerator 213 can also be adopted.

As described above, the carbon dioxide recovery system 201 of the fifth embodiment absorbs the carbon dioxide contained in the exhaust gas in the same way as the carbon dioxide recovery system 200 of the fourth embodiment and can use waste heat without necessity of using steam of the power generation boiler for instantaneously heating the insoluble compounds 260. Thus, the thermal efficiency of the system can be improved. Besides, the insoluble compounds 260 and the alkali material as the material for the alkaline solution 236 can be purified by repeating the deposition and heating of the insoluble compounds 260. For example, high-purity sodium carbonate or sodium hydrogencarbonate can be obtained from sodium carbonate containing impurities.

### (EXAMPLES)

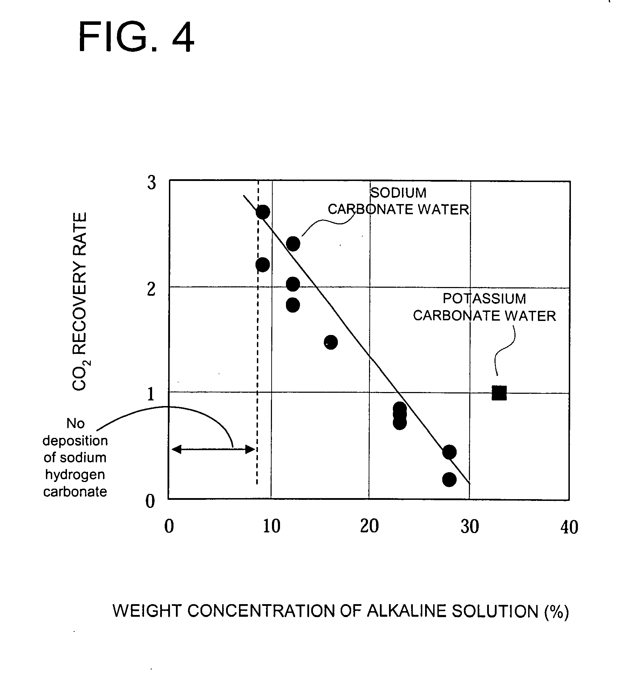

Fig. 4 shows the results of measuring a carbon dioxide recovery rate by the alkaline solution.

A carbon dioxide absorption rate by the alkaline solution was measured by using sodium carbonate water and potassium carbonate water as the alkaline solution and blowing carbon dioxide into the alkaline solution having a temperature of 60°C.

As a result, it was found that when it was assumed that potassium carbonate water having a weight concentration of 33% had a ratio of carbon dioxide recovery rate of 1, sodium carbonate water having a weight concentration of 9 to 22% had a ratio of carbon dioxide recovery rate of 1 or more.

Potassium carbonate water having a weight concentration of less than 18% did not deposit potassium bicarbonate even if it absorbed enough carbon dioxide. Sodium carbonate water having a weight concentration of less than 9% did not deposit sodium hydrogencarbonate, but sodium carbonate water having a weight concentration of 9% or more deposited sodium hydrogencarbonate.

In the carbon dioxide recovery system according to the embodiments of the present invention, when an alkali material sodium carbonate or sodium hydroxide is used as a solute of the alkaline solution 236, a weight concentration of such an alkali material in the alkaline solution 236 is adjusted to 9 to 22%. In a case where sodium hydroxide is used, it is adjusted to 9 to 22% in terms of sodium carbonate. Therefore, the recovery rate of the carbon dioxide can be enhanced in comparison with a case that a high-concentration potassium carbonate solution is used.

And, the insoluble compound 260 (sodium hydrogencarbonate containing a small amount of water) starts to discharge carbon dioxide when it becomes 60°C or more under reduced pressure, but the sodium hydrogencarbonate dissolved in the alkaline solution 236 or the deposited sodium hydrogen carbonate does not discharge carbon dioxide because the temperature of the alkaline solution 236 within the absorber 210 is set to 60 to 75°C under the atmospheric pressure. Inotherwords, the carbon dioxide which is once absorbed within the absorber 210 is not discharged from the exhaust port 237 of the absorber 210 to the atmosphere, so that the carbon dioxide can be recovered efficiently.

### (OTHER EMBODIMENTS)

Other embodiments of the present invention will be described with reference to Fig. 1 through Fig. 3.

The carbon dioxide recovery system of the present invention has the absorber and the collection tank (or split tanks) disposed separately, but the alkaline solution storage part at a lower part of the absorber and the collection tank (or the split tanks) maybe configured integrally . In this case, the same actions and operations as those of the above-described individual carbon dioxide recovery systems can be obtained.

### INDUSTRIAL APPLICABILITY

The system and the method for recovering carbon dioxide contained in an exhaust gas according to the present invention can be used for a carbon dioxide recovery system or the like that recovers carbon dioxide contained in a waste gas exhausted from a thermal power plant, a municipal waste incineration plant, or the like. Therefore, the present invention has industrial applicability.

## Claims

1. A system for recovering carbon dioxide in an exhaust gas, comprising:
an absorption device which is provided with an exhaust gas introduction port, an alkaline solution introduction port, a remaining exhaust gas discharge port and an alkaline solution discharge port and causes gas-liquid contact between an exhaust gas introduced from the exhaust gas introduction port and an alkaline solution introduced from the alkaline solution introduction port to absorb carbon dioxide contained in the exhaust gas by the alkaline solution;
a regeneration device which is provided with an alkaline solution spurt port, a regenerated alkaline solution discharge port and a carbon dioxide discharge port and discharges carbon dioxide from the alkaline solution having absorbed the carbon dioxide to regenerate the alkaline solution;
a first alkaline solution reflux line which refluxes the alkaline solution being discharged from the alkaline solution discharge port of the absorption device to the alkaline solution introduction port;
a second alkaline solution reflux line which refluxes the regenerated alkaline solution being discharged from the regenerated alkaline solution discharge port of the regeneration device to the alkaline solution spurt port; and
a storage tank which is comprised of a plurality of split tanks capable of intervening in either the first alkaline solution reflux line or the second alkaline solution reflux line by switching the alkaline solution reflux lines.

2. The system for recovering carbon dioxide in an exhaust gas according to claim 1, wherein a main solute of the alkaline solution is sodium carbonate, potassium carbonate or amine.

3. A method for recovering carbon dioxide in an exhaust gas, comprising:
a first absorption step which refluxes a first alkaline solution being discharged from an alkaline solution discharge port of an absorption device to an alkaline solution introduction port of the absorption device through a first split tank among a plurality of split tanks configuring a storage tank to cause gas-liquid contact between the exhaust gas and the first alkaline solution to repeatedly absorb carbon dioxide contained in the exhaust gas by the first alkaline solution; and
a first regeneration step which switches a reflux line of the first alkaline solution to introduce the first alkaline solution having absorbed the carbon dioxide in the first absorption step to an alkaline solution spurt port of a regeneration device, refluxes the first alkaline solution being discharged from a regenerated alkaline solution discharge port of the regeneration device to the alkaline solution spurt port through the first split tank, and discharges repeatedly the carbon dioxide into the regeneration device to regenerate the carbon dioxide absorption capacity of the first alkaline solution.

4. The method for recovering carbon dioxide in an exhaust gas according to claim 3, further comprising:
a second absorption step which guides a second alkaline solution stored in a second split tank of the storage tank to the alkaline solution introduction port of the absorption device when the first regeneration step is being performed, refluxes the second alkaline solution being discharged from the alkaline solution discharge port of the absorption device to the alkaline solution introduction port through the second split tank and causes gas-liquid contact between the exhaust gas and the second alkaline solution to repeatedly absorb the carbon dioxide contained in the exhaust gas by the second alkaline solution.

5. The method for recovering carbon dioxide in an exhaust gas according to claim 4, further comprising:
a second regeneration step which switches the reflux line of the alkaline solution to introduce the second alkaline solution having absorbed the carbon dioxide in the second absorption step to the alkaline solution spurt port of the regeneration device, refluxes the second alkaline solution being discharged from the regenerated alkaline solution discharge port of the regeneration device to the alkaline solution spurt port through the second split tank, and discharges repeatedly the carbon dioxide into the regeneration device to regenerate the carbon dioxide absorption capacity of the second alkaline solution; and
a third absorption step which switches a reflux line at the same time when the reflux line is switched in the second regeneration step, guides the first alkaline solution regenerated in the first regeneration step to the alkaline solution introduction port of the absorption device, refluxes the first alkaline solution being discharged from the alkaline solution discharge port of the absorption device to the alkaline solution introduction port through the first split tank, and causes gas-liquid contact between the exhaust gas and the first alkaline solution to repeatedly absorb the carbon dioxide contained in the exhaust gas by the first alkaline solution.

6. A system for recovering carbon dioxide in an exhaust gas, comprising:
an absorption device which is provided with an exhaust gas introduction port, an alkaline solution introduction port, a remaining exhaust gas discharge port and an alkaline solution discharge port, and causes gas-liquid contact between the introduced exhaust gas and an alkaline solution to absorb carbon dioxide contained in the exhaust gas by the alkaline solution to produce a reaction product insoluble compound;
an alkaline solution reflux line which refluxes the alkaline solution being discharged from the alkaline solution discharge port of the absorption device to the alkaline solution introduction port; and
a collection tank which is intervened in the alkaline solution reflux line or connected by a pipe branched from the alkaline solution reflux line to collect an insoluble compound contained in the alkaline solution.

7. The system for recovering carbon dioxide in an exhaust gas according to claim 6, wherein the alkaline solution is produced by dissolving sodium carbonate into water, and the sodium carbonate dissolved in the alkaline solution has a weight concentration of 9 to 22%.

8. The system for recovering carbon dioxide in an exhaust gas according to claim 6, further comprising:
a regeneration device to which the insoluble compound is supplied and which heats the insoluble compound to discharge carbon dioxide, thereby regenerating an alkalimaterial, which configures the alkaline solution, from the insoluble compound.

9. A method for recovering carbon dioxide in an exhaust gas, comprising:
an absorption step which causes gas-liquid contact between the exhaust gas and an alkaline solution and absorbs the carbon dioxide contained in the exhaust gas by the alkaline solution to generate a reaction product insoluble compound;
a circulation step which causes repeatedly gas-liquid contact between the alkaline solution and the exhaust gas; and
a collection step which collects the insoluble compound contained in the alkaline solution.

10. The method for recovering carbon dioxide in an exhaust gas according to claim 9, further comprising:
a regeneration step which heats the insoluble compound collected in the collection step to discharge the carbon dioxide and regenerates an alkali material, which configures the alkaline solution, from the insoluble compound.

11. The method for recovering carbon dioxide in an exhaust gas according to claim 10, wherein the absorption step, the collection step, the circulation step and the regeneration step are repeated sequentially.
